Europäisches Patentamt

European Patent Office

Office européen des brevets

(11) Veröffentlichungsnummer: **0 207 373**
**A1**

## (12) EUROPÄISCHE PATENTANMELDUNG

(21) Anmeldenummer: 86108313.7

(51) Int. Cl.⁴: **G02B 6/38**

(22) Anmeldetag: 18.06.86

(30) Priorität: 21.06.85 DE 3522288

(43) Veröffentlichungstag der Anmeldung:
07.01.87 Patentblatt 87/02

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Löffler, Herbert**
**Kirtaweg 38**
**D-8000 München 82(DE)**

(54) **Lichtwellenleiterstecker.**

(57) Der Endabschnitt eines Lichtwellenleiters ist in einem stielartigen Ansatz eines Schwenkkörpers (9) fixiert, der im Klemmsitz in dem Lichtwellenleiterstecker (1) gelagert ist. Dabei ist der Ansatz zum freien Ende des Steckers gerichtet und bildet dort ein von außen erfaßbares Verstellorgan für den Schwenkkörper (9). Ein Schwenkbereich von ca. einem viertel Grad führt bei geeigneter Länge des Ansatzes zu einer maximalen Querverschiebung der Lichtwellenleiterstirnseite gegen die Steckerachse - (8) von ca. 4μ. Eine ursprüngliche "Ablage" der Lichtwellenleiterstirnseite in dieser Größenordnung wird daher durch Verstellen des Schwenkkörpers ausgeglichen und die Lichtwellenleiterstirnseite dadurch genau auf Steckerachse Zentriert.

FIG 1

EP 0 207 373 A1

## Lichtwellenleiterstecker

Die Erfindung bezieht sich auf einen Lichtwellenleiterstecker mit einem Steckerstift, der äußere achsparallele Führungsflächen und einen im Steckerstift im Klemmsitz gelagerten Schwenkkörper aufweist, und mit einem zum freien Ende des Steckerstiftes gerichteten Ansatz des Schwenkkörpers, in dem ein Endabschnitt einer Lichtleitfaser fixiert ist, der unmittelbar an eine stirnseitige Lichtaus- und/oder Eintrittsfläche der Faser, welche die optische Koppelfläche des Lichtwellenleitersteckers bildet, anschließt.

Ein derartiger Lichtwellenleiterstecker ist aus der FR-A-2 289 927 (DE-A-25 47 420) bekannt. Bei dem bekannten Stecker wird die Drehbeweglichkeit des Schwenkkörpers dazu verwendet, um das freie Ende einer Lichtleitfaser in eine genau koaxial zur Hülse befindliche Lage zu bringen.

Handelt es sich jedoch bei der Lichtleitfaser, die mit Hilfe eines solchen Steckers optisch z.B. an eine weiterführende Lichtleitfaser angeschlossen werden soll, um eine sogenannte Monomodefaser, dann würde man den Schwenkkörper selbst und die Lichtleitfaser im Schwenkkörper derart toleranzarm befestigen müssen, um eine genau koaxiale Lage der Faser zur Hülse zu erhalten, daß ein solcher Stekker schließlich nicht mehr wirtschaftlich hergestellt werden könnte.

Aufgabe vorliegender Erfindung ist es daher, einen Lichtwellenleiterstecker der eingangs genannten Art so auszubilden, daß ein Querversatz der Lichtwellenleiterstirnseite gegenüber der Achse einer weiteren optischen Koppelfläche vom Ausmaß der Lichtwellenleiterstirnseite auch bei fehlender Möglichkeit einer achsparallelen Ausrichtung des Lichtwellenleiterendabschnittes auf die Führungsflächen des Steckerstiftes so ausgeglichen werden kann, daß die optischen Koppelbedingungen möglichst optimal bleiben.

Erfindungsgemäß ergibt sich die Lösung dieser Aufgabe dadurch, daß das freie Ende des stielartigen Ansatzes zusammen mit der von diesem umgebenen optischen Koppelfläche der Lichtleitfaser ballig ausgebildet ist und daß das freie Ende des stielartigen Ansatzes aus dem Steckerstift derart vorstehend bemessen ist, daß der stielartige Ansatz am Ende des Steckerstiftes ein von außen erfaßbares Verstellorgan des Schwenkkörpers bildet.

Bei einem maximalen Schwenkwinkel von ca. 1/4° läßt sich eine Querverschiebung der Lichtwellenleiterstirnseite um ca. 4μ erzielen. Die geringfügige Schrägstellung der Lichtwellenleiterstirnseite, die dabei auftreten kann, wird durch die ballige Ausbildung der Lichtwellenleiterstirnseite und des freien Endes des stielartigen Ansatzes weitgehend ausgeglichen, da sich die Lichtwellenleiterstirnseiten zweier solcher Lichtwellenleiterstecker, die mit geringem Druck aneinanderliegen, nun selbsttätig "planieren" können und somit ein guter optischer Kontakt zwischen den beiden Lichtwellenleitern vorhanden ist.

Im Rahmen vorliegender Erfindung kann weiter vorgesehen sein, daß der Schwenkkörper und der stielartige Ansatz zusammen durch einen etwa birnenförmigen Körper realisert sind.

Auf diese Weise ergibt sich ein einstückiges und daher leicht handhabbares Schwenkkörperbauteil.

Schließlich kann noch vorgesehen sein, daß der Schwenkkörper in einem in einer Bohrung des Steckerstiftes fixierten Einsatz gelagert und mit radialen Schlitzen versehen ist.

Ein solcher Einsatz ist dann vorteilhaft, wenn der Stekkerstift selbst z.B. aus Hartmetall besteht. Für den Einsatz kann ein Material gewählt werden, z.B. Messing oder Neusilber, das optimale Lagerbedingungen für den ebenfalls z.B. aus Neusilber bestehenden Schwenkkörper schafft. Durch die Schlitzung wird die Elastizität des Schwenkkörpers und damit dessen Sitz im Steckerstift weiter verbessert.

Nachfolgend werden Ausführungsbeispiele des Lichtwellenleitersteckers nach der Erfindung anhand von zwei Figuren noch näher erläutert. Dabei zeigen beide Figuren jeweils in sehr starker Vergrößerung einen Längsschnitt durch den vorderen Teil eines Lichtwellenleitersteckers.

Im einzelnen ist den Figuren zu entnehmen, daß der Lichtwellenleiterstecker einen Steckerstift 1 aufweist, der z.B. aus Hartmetall besteht und mit einem hochpräzisen zylindrischen Außenmantel 2 versehen ist. Eine konzentrische Längsbohrung 3 durchsetzt den Steckerstift 1.

In dieser Längsbohrung 3 sitzt in der Nähe des freien Endes 4 des Steckerstiftes 1 ein Einsatz 5, der z.B. aus Messing oder Neusilber bestehen kann. Eine diesen Einsatz 5 durchsetzende Bohrung 6, die konzentrisch zur Bohrung 3 des Steckerstiftes 1 ausgebildet ist, erweitert sich zum freien Ende 4 des Steckerstiftes hin zu einer Kammer 7. Die rotationssymmetrisch zur Achse 8 des Steckerstiftes 1 ausgebildete Kammer 7 bildet einen Aufnahmeraum für einen Schwenkkörper 9. Der ebenfalls zur Achse 8 rotationssymmetrische Schwenkkörper 9 weist Begrenzungsflächen 10 auf, die z.B. einer Kugeloberfläche entsprechen. Der Schwenkkörper 9 sitzt im Klemmsitz in der Kammer 7 des Einsatzes 5 und verändert daher seine Lage in der Kammer 7 nicht selbsttätig, wenn keine äußeren Kräfte auf ihn einwirken, kann aber durch Verstellen von außen her in allen Richtungen eine Rotationsbewegung von bis zu einem halben Grad ausführen.

Der Schwenkkörper 9 ist mit einem stielartigen Ansatz 11 (bzw. 11a, 11b, Fig. 2) versehen, der zum freien Ende 4 des Steckerstiftes 1 gerichtet ist.

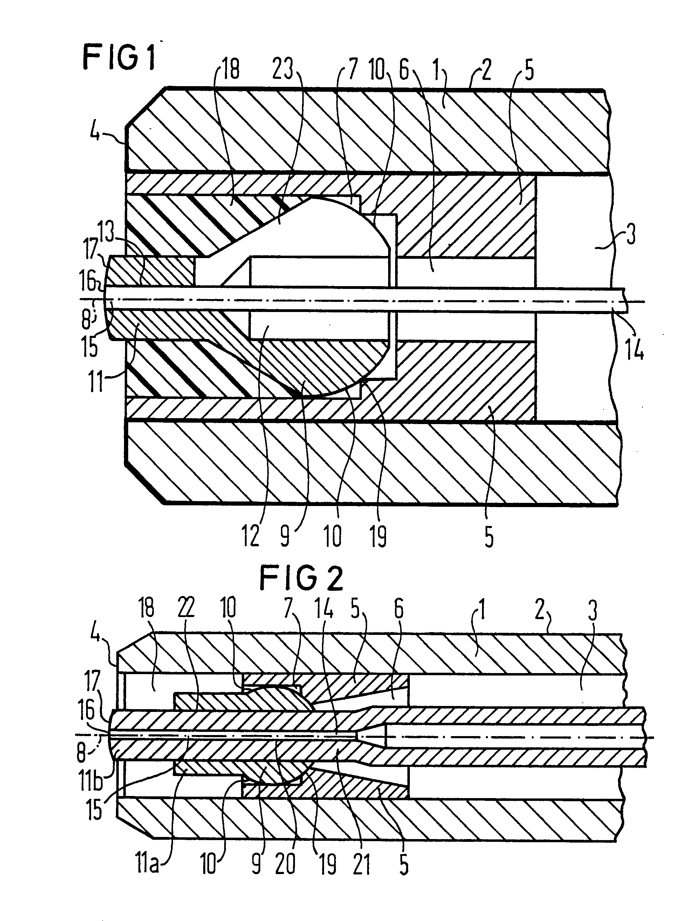

Bei dem Ausführungsbeispiel nach Fig. 1 ist der stielartige Ansatz 11 ein integraler Bestandteil des Schwenkkörpers 9, der dadurch zusammen mit dem Ansatz 11 eine etwa birnenförmige Konfiguration hat. Der Schwenkkörper 9 wird zusammen mit dem Ansatz 11 von einer konzentrischen Bohrung 12 durchsetzt, die sich in einem Endbereich 13 auf den Durchmesser einer abgemantelten Lichtleitfaser 14 verengt. Die Lichtleitfaser 14 durchsetzt die Bohrung 3 des Steckerstiftes bzw. die Bohrung 6 des Einsatzes und sitzt mit einem Endabschnitt 15, der unmittelbar an eine stirnseitige Lichtaus- und/oder Eintrittsfläche 16 der Faser 14 anschließt, im Endbereich 13 der Bohrung 12.

Auf der Seite des freien Endes 4 des Steckerstiftes 1 ragt der Ansatz 11 etwas aus dem Steckerstift hervor, wodurch auch die optische Koppelfläche 16 des Lichtwellenleiters 14, die durch die stirnseitige Lichtaus-und/oder Eintrittsfläche des Lichtwellenleiters 14 gebildet wird, aus dem Steckerstift 1 vorsteht. Durch entsprechendes Abschleifen ist die Koppelfläche 16 mit dem freien Ende 17 des Ansatzes 11 bündig gemacht und zugleich ist dieses Ende 17 zusammen mit der Koppelfläche 16 ballig verrundet.

Da der Außendurchmesser des Ansatzes 11 wesentlich geringer ist, als der Innendurchmesser des Einsatzes 5 bzw. des Steckerstiftes 1, ist der Ansatz 11 von einem Freiraum 18 umgeben, der es ermöglicht, den Ansatz 11 von außen her zu erfassen, wenn der Schwenkkörper 9 in seiner Endstellung innerhalb des Steckerstiftes 1 sitzt. Dabei begrenzen Anschlagflächen bzw. Anschlagkanten 19 das weitere Eindrücken des Schwenkkörpers 9 in den Steckerstift 1 bzw. den Einsatz 5.

Im Schwenkkörper vorgesehene Radialschlitze 23 verleihen diesem eine gewisse Elastizität und verbessern den Klemmsitz des Schwenkkörpers im Einsatz 5, wobei die Schlitze etwas zusammengedrückt werden.

Bei dem Ausführungsbeispiel nach Fig. 2 ist die abgemantelte lichtleitende Faser 14, deren Kern der eigentliche Lichtwellenleiter ist, in der konzentrischen Bohrung 20 eines metallischen Röhrchens 21 angeordnet und das Röhrchen 21 selbst wiederum in einer konzentrischen Bohrung 22 des Schwenkkörpers 9 fixiert. Die Fixierung des Röhrchens 21 im Schwenkkörper 9 kann vorteilhaft z.B. dadurch erfolgen, daß der Schwenkkörper 9 erwärmt wird, daß anschließend der Schwenkkörper auf das Röhrchen aufgeschoben wird und nach seiner Abkühlung auf dem Röhrchen 21 festsitzt. Auch bei dem Ausführungsbeispiel nach Fig. 2 hat der Schwenkkörper 9 einen stielartigen Ansatz 11a, der jedoch durch einen Endbereich 11b des Röhrchens 21, der in Richtung auf das freie Ende 4 des Steckerstiftes aus dem stielartigen Ansatz 11a des Schwenkkörpers 9 vorsteht, über das freie Ende 4 des Steckerstiftes 1 hinaus verlängert ist. Die ballige Ausbildung der Lichtwellenleiterkoppelfläche 16 und des freien Endes 17 des Endbereiches 11b des Röhrchens 21 entsprechen im übrigen der Ausbildung der entsprechend bezeichneten Teile bei dem Ausführungsbeispiel nach Fig. 1.

Wird der Ansatz 11 (bw. 11a und 11b) mit seiner Achse und damit die Achse des Lichtwellenleiters 14 parallel zur Achse 8 des Steckerstiftes 1 ausgerichtet, so ergibt sich trotz relativ großer Sorgfalt bei der Herstellung der einzelnen Teile des Lichtwellenleitersteckers toleranzbedingt ein Versatz zwischen der Achse 8 des Steckerstiftes 1 und der Achse des in dem Ansatz 11 fixierten Lichtwellenleiters 14.

Dieser Versatz kann nun dadurch ausgeglichen werden, daß mit Hilfe geeignet ausgebildeter Werkzeuge der Ansatz 11 am freien Ende 4 des Steckerstiftes 1 erfaßt und der Schwenkkörper 9 mit Hilfe des Ansatzes 11 geringfügig gedreht wird, bis der Schnittpunkt der Achse des Lichtwellenleiters 14 mit der Koppelfläche 16, also der Mittelpunkt der Koppelfläche 16, auf der Achse 8 des Steckerstiftes liegt. Bei der Herstellung und dem Zusammenbau der einzelnen Teile des Lichtwellenleitersteckers kann der Achsenversatz in einem Bereich gehalten werden, der kleiner ist als ca. 4μ. Bemißt man nun die relative Länge des Ansatzes 11, also den Abstand der Koppelfläche 16 vom Drehpunkt des Schwenkkörpers 9 ausreichend groß, so reicht eine Schrägstellung von max. einem viertel Grad der Achse des Lichtwellenleiters 14 gegenüber der Achse 8 des Steckerstiftes aus, um den Mittelpunkt der Koppelfläche 16 mit der Achse 8 zur Deckung zu bringen.

Eine solche Schrägstellung der Koppelfläche 16 kann insbesondere im Hinblick auf die ballige Ausbildung dieser Fläche in Kauf genommen werden, insbesondere dann, wenn mit dieser Koppelfläche 16 eine weitere gleichartige Koppelfläche 16 in Kontakt gebracht wird, wobei beide Koppelflächen geringfügig gegeneinander gedrückt gehalten werden. Dadurch erzielt man nämlich eine gegenseitige selbsttätige "Planierung" der Koppelflächen 16. Dies führt zu einer verlustarmen Verbindung zwischen zwei in Koppelflächen 16 endenden Lichtwellenleitern.

Die optimale Einstellung des Schwenkkörpers 9 und damit des Ansatzes 11 kann durch Einfüllen eines aushärtenden Klebers in den Freiraum 18 gesichert werden. Jedoch bleibt durch den Klemmsitz des Schwenkkörpers 9 im Ansatz 5 eine über den Ansatz 11 einjustierte Winkelstellung des Schwenkkörpers auch ohne diese Fixierungsmaßnahme erhalten, so daß ein auf diese Weise aufgebauter Lichtwellenleiterstecker nach dem Justiervorgang, also nach dem Einstellen des Schwenkkörpers, sofort aus der Justiervorrichtung herausgenommen werden kann, ohne daß befürchtet werden muß, daß sich der Schwenkkörper selbsttätig wieder verstellt.

Bezugszeichenliste

1 Steckerstift
2 Außenmantel des Stiftes
3 Längsbohrung
4 Freies Ende des Stiftes
5 Einsatz
6 Bohrung im Einsatz
7 Kammer
8 Achse des Stiftes
9 Schwenkkörper
10 Begrenzungsfläche des Schwenkkörpers
11, 11a Ansatz des Schwenkkörpers
11b Röhrchenendbereich
12 Bohrung im Schwenkkörper
13 Endbereich der Bohrung
14 Lichtleitfaser
15 Endabschnitt der Lichtleitfaser
16 Lichtaus-und/oder Eintrittsfläche bzw. Koppelfläche
17 Freies Ende des Ansatzes
18 Freiraum
19 Anschlagfläche oder Kante
20 Röhrchenbohrung
21 Röhrchen
22 Schwenkkörperbohrung (Fig. 2)
23 Radialschlitze

## Ansprüche

1. Lichtwellenleiterstecker mit einem Steckerstift, der äußere achsparallele Führungsflächen und einen im Steckerstift im Klemmsitz gelagerten Schwenkkörper aufweist, und mit einem zum freien Ende des Steckerstiftes gerichteten stielartigen Ansatz des Schwenkkörpers, in dem ein Endabschnitt einer Lichtleitfaser fixiert ist, der unmittelbar an eine stirnseitige Lichtaus-und/oder Eintrittsfläche der Faser, welche die optische Koppelfläche des Lichtwellenleitersteckers bildet, anschließt, **dadurch gekennzeichnet**

, daß das freie Ende (17) des stielartigen Ansatzes (11) zusammen mit der von diesem umgebenen optischen Koppelfläche (16) der Lichtleitfaser (14) ballig ausgebildet ist und daß das freie Ende (17) des stielartigen Ansatzes (11) aus dem Steckerstift (1) derart vorstehend bemessen ist, daß der stielartige Ansatz (11) am Ende des Steckerstiftes (4) ein von außen erfaßbares Verstellorgan des Schwenkkörpers (9) bildet.

2. Lichtwellenleiterstecker nach Anspruch 1,

**dadurch gekennzeichnet,**

daß der Schwenkkörper (9) und der stielartige Ansatz (11) zusammen durch einen etwa birnenförmigen Körper realisiert sind.

3. Lichtwellenleiterstecker nach einem der Ansprüche 1 oder 2,

**dadurch gekennzeichnet,**

daß der Schwenkkörper (9) in einem in einer Bohrung (3) des Steckerstiftes (1) fixierten Einsatz (5) gelagert und mit radialen Schlitzen (23) versehen ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | FR-A-2 289 927 (ITT) <br> * Seite 1, Zeile 28 - Seite 3, Zeile 6; Abbildungen 1-4 * | 1-3 | G 02 B 6/38 |
| | --- | | |
| A | PATENTS ABSTRACTS OF JAPAN, Band 1, Nr. 117, Seite 4568 E-77; JP-A-52 49 039 (SUMITOMO DENKI KOGYO K.K.) 04-19-1977 <br> * Zusammenfassung * | 1,2 | |
| | --- | | |
| A | EP-A-0 022 374 (POST OFFICE) <br> * Seite 5, Zeile 26 - Seite 6, Zeile 8; Figur 1 * | 1,2 | |
| | --- | | |
| A | US-A-4 351 586 (M.J. PHILLIPS) <br> * Figur 1 * | 2 | |
| | ----- | | **RECHERCHIERTE SACHGEBIETE (Int. Cl.4)** <br> G 02 B |

Der vorliegende Recherchenbericht wurde für alle Patentansprüche erstellt.

| Recherchenort | Abschlußdatum der Recherche | Prüfer |
|---|---|---|
| DEN HAAG | 27-09-1986 | PFAHLER R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82